# EUROPÄISCHE PATENTSCHRIFT

(11) **EP 1 319 439 B1**
(45) Veröffentlichungstag und Bekanntmachung des Hinweises auf die Patenterteilung: **15.02.2006**
(21) Anmeldenummer: 02027402.3
(22) Anmeldetag: 09.12.2002
(51) Int. Cl.: B05B 5/16, B05B 12/14

(54) **Sensoranordnung für ein auf Hochspannungspotential liegendes Teil einer Beschichtungsanlage**
Sensor arrangement for a part of a coating installation, said part being subjected to a high voltage
Dispositif de detection pour une partie d'une installation de revêtement, ladite partie étant à haute tension

(30) Priorität: 14.12.2001 DE 10161550
(43) Veröffentlichungstag der Anmeldung: 18.06.2003
(73) Patentinhaber: Dürr Systems GmbH, 70435 Stuttgart (DE)
(72) Erfinder: Baumann, Michael, 74223 Flein (DE); Poppe, Siegfried, 71706 Unterriexingen (DE); Yamabe, Hidetoshi, Tokyo (JP)
(74) Vertreter: Heusler, Wolfgang

(56) Entgegenhaltungen:
- EP-A- 0 888 825
- EP-A- 0 935 999
- DE-A- 4 342 128
- DE-A- 10 064 065
- US-A- 4 911 015

## Beschreibung

Die Erfindung betrifft eine Sensoranordnung gemäß dem Oberbegriff des Anspruchs 1.

Insbesondere handelt es sich um eine Anlage für die Serienbeschichtung von Werkstücken wie Fahrzeugkarossen, in der das Beschichtungsmaterial bekanntlich innerhalb oder außerhalb der zur Beschichtung verwendeten elektrostatischen Zerstäuber auf Hochspannungspotential in der Größenordnung von beispielsweise 100 kV aufgeladen wird, um zu dem geerdeten Werkstück zu wandern.

Ein typisches Beispiel für einen bewegbaren Körper, dessen Lage oder Bewegung in einem auf Hochspannungspotential liegenden Teil einer solchen Anlage gemeldet werden muss, sind zwischen Molchstationen einer Farbversorgungsleitung hin- und herbewegbare Molche. Wie u.a. in DE 00 64 065, EP 0 319 172, DE 100 33 987 und DE 101 31 562 erläutert ist, werden die zerstäuberseitigen Molchstationen während des Beschichtungsbetriebes vom Zerstäuber über die elektrisch leitende Farbsäule auf Hochspannung gelegt. Für die Erfassung der Molchpositionen in den unter Hochspannung stehenden Leitungen und Molchstationen werden spezielle Initiatoren mit pneumatischen Schaltern verwendet, die auf im Molchkörper integrierte Magnete ansprechen und unter Hochspannung arbeiten können, wofür aber Nachteile wie hoher Platzbedarf und unerwünscht lange Reaktionszeiten in Kauf genommen werden müssen. Ähnliche Probleme treten bei anderen Anlagenteilen auf.

Der Erfindung liegt die Aufgabe zugrunde, eine Sensoranordnung anzugeben, mit der die Lage oder Bewegung eines bewegbaren Körpers in einem unter Hochspannung stehenden Teil der Beschichtungsanlage verzögerungsfrei und platzsparend gemeldet werden kann. Diese Aufgabe wird durch die in den Patentansprüchen gekennzeichnete Sensoranordnung gelöst.

Erfindungsgemäß verwendbare magnetisch-optische Sensorsysteme nützen beispielsweise die als Faraday-Effekt bekannte Drehung der Polarisationsrichtung von linear polarisierten Lichtwellen bei Durchgang durch ein isotropes Medium unter Einfluss eines Magnetfeldes, oder auch den ebenfalls bekannten magnetooptischen Kerr-Effekt. Das magnetisch wirksame Geberelement kann ein Dauermagnet sein oder auch ein Element aus Eisen, Stahl oder sonstigem Werkstoff mit ferromagnetischen Eigenschaften, mit dem das Magnetfeld eines in dem Sensorelement befindlichen Magnetelements veränderbar ist. Derartige Sensorsysteme sind für andere Zwecke wie z.B. als Positionssensoren für die Seiten- und Höhenruder von Flugzeugen als Ersatz für die fly-bywire-Technik bekannt (EP 0 319 172) und im Handel erhältlich. In elektrostatischen Beschichtungsanlagen haben sie aber den besonderen und überraschenden Vorteil, dass sie problemlos unter Hochspannung arbeiten können. Im Vergleich mit den hierfür in elektrostatischen Beschichtungsanlagen insbesondere als Molchsensor verwendeten pneumatischen Schaltern zeichnen sie sich durch kleinere Bauform und wesentlich kürzere Reaktionszeiten aus, die für die automatische Steuerung des Beschichtungsbetriebes in modernen Serienbeschichtungsanlagen wichtig sind. Diese Vorteile werden vorzugsweise ohne aktive elektrische Bauelemente im Sensor erreicht, die unter den gegebenen Hochspannungsbedingungen eine Batterie benötigen würden und entsprechend kurze Standzeiten hätten. Weitere Vorteile des magnetisch-optischen Sensorsystems bestehen darin, dass es keinen Abgleich und keine aufwendige Software für das Programmsteuersystem der Beschichtungsanlage erfordert.

An den in der Zeichnung dargestellten Ausführungsbeispielen wird die Erfindung näher erläutert. Es zeigen
- Fig. 1: das Sensorsystem in Verbindung mit einer gemolchten Farbleitung;
- Fig. 2: ein Sensorsystem, dessen Sensorelement in eine Molchstation eingebaut ist;
- Fig. 3: das Sensorsystem in Verbindung mit einem Pneumatikzylinder; und
- Fig. 4: das Sensorsystem in Verbindung mit einer Dosierpumpe für Beschichtungsmaterial.

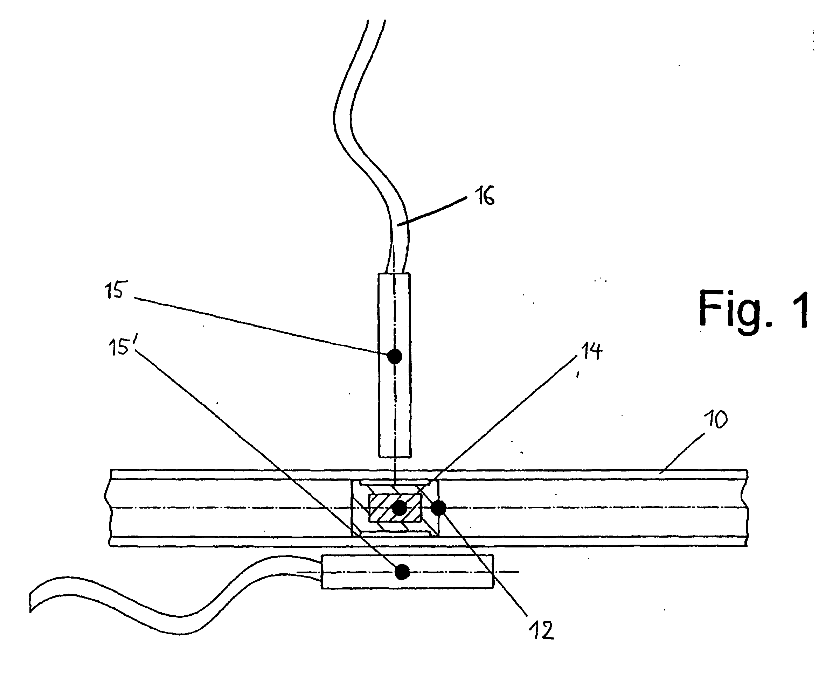

In Fig. 1 ist eine Farbleitung 10 dargestellt, die elektrisch leitendes Beschichtungsmaterial wie z.B. Wasserlack einem elektrostatischen Zerstäuber (nicht dargestellt) zuführt, von dem das in der Farbleitung 10 befindliche Beschichtungsmaterial auf Hochspannungspotential aufgeladen wird. Zum Fördern des Beschichtungsmaterials und/oder zum Reinigen der Leitung 10 wird ein Molch 12 in der Leitung hin- und herbewegt, dessen Vorbeilauf an einer bestimmten Stelle bekanntlich dem Anlagensteuersystem gemeldet werden muss und in dessen Körper zu diesem Zweck ein magnetisch wirksames Geberelement wie z.B. ein Dauermagnet 14 integriert ist, auf den ein an der betreffenden Stelle angeordneter Molchsensor 15 anspricht. Der Molchsensor 15 besteht zweckmäßig aus einem relativ dünnen langgestreckten zylindrischen Gehäuse, das eine Polarisationseinrichtung enthält (nicht dargestellt), die an eine Lichtwellenleiteranordnung 16 mit zwei optischen Fasern angeschlossen ist, von denen die eine Faser Licht beispielsweise von einer Diode zuführt und die andere Faser von dem Sensor erzeugte Lichtsignale einer von dem Hochspannungsbereich entfernten elektronischen Einrichtung zur Erzeugung eines dem Lichtsignal entsprechenden elektrischen Signals sendet. Durch den Polarisator wird das ihm zugeführte Licht linear polarisiert. Das polarisierte Licht wird von einem am Stirnende des Sensorgehäuses befindlichen Spiegel reflektiert. Beispielsweise kann das polarisierte Licht gemäß Fig. 15 der eingangs erwähnten EP 0 319 172 über ein Brechungselement (Faraday-Effekt-Element) zu einem Polarisationsdetektor oder Analysator reflektiert werden, der durch einen Teil der Polarisationseinrichtung gebildet sein kann, und an den auf der entgegengesetzten Seite die Ausgangsfaser angeschlossen ist. Im Normalzustand gelangt das polarisierte Licht ungestört in die Ausgangsfaser. Wenn der Sensor sich aber im Magnetfeld des Molches 12 befindet, wird das linear polarisierte Licht durch den Faraday-Effekt in Abhängigkeit von der Feldstärke gedreht, so dass sein Weg in die Ausgangsfaser versperrt ist. Die Lichtsignaländerung wird von der entfernten elektronischen Einrichtung ausgewertet. Auch ein nach dem magnetooptischen Kerr-Effekt arbeitender Sensor kann verwendet werden, bei dem die Polarisation von an einem magnetisierten ferromagnetischen Spiegel reflektiertem Licht verändert wird.

Im Handel erhältliche magnetooptische Sensoren der dargestellten zylindrischen Form haben beispielsweise einen Durchmesser von etwa 3 bis 8 mm und eine Länge von 20 mm. Die Lichtwellenleiteranordnung 16 ist zweckmäßig flexibel, so dass sie problemlos innerhalb der Beschichtungsanlage verlegt werden kann.

Während der Molchsensor 15 mit der Längsachse seines zylindrischen Gehäuses quer zu der Bewegungsrichtung des Molches 12 angeordnet ist, so dass seine Stirnfläche dem Magnet 14 zugewandt ist, kann stattdessen oder zusätzlich ein ähnlicher Molchsensor 15' mit seiner Längsachse parallel zu der Bewegungsrichtung an der Leitung 10 angeordnet sein.

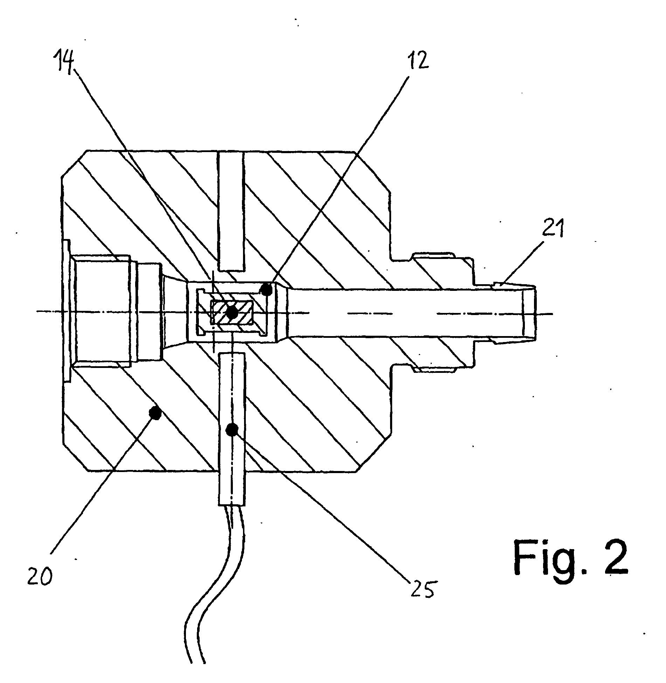

Fig. 2 zeigt eine Molchstation 20 einer der an sich bekannten Beschichtungsanlagen mit gemolchten Leitungen. An den Anschluss 21 der Molchstation 20 kann z.B. die molchbare Leitung 10 (Fig.1) angeschlossen sein. Der den Magnet 14 oder sonstigen Geber enthaltende Molch 12 befindet sich hier in einer durch den Molchsensor 25 überwachten und gemeldeten Endlage in der Molchstation. Der in die Molchstation eingebaute Molchsensor 25 kann hinsichtlich Form, Lage und Wirkungsweise dem oben beschriebenen Sensor 15 entsprechen.

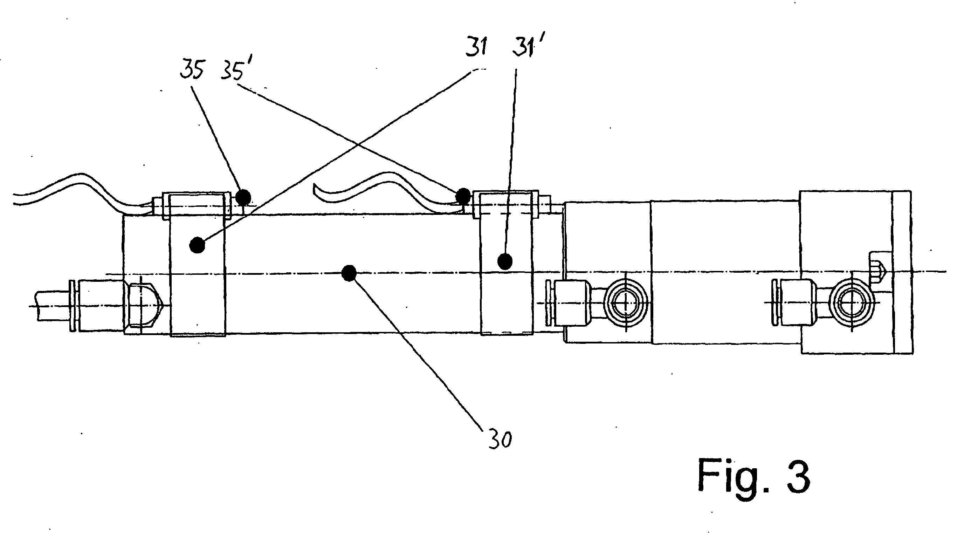

Einer der Vorzüge des beschriebenen Sensorsystems besteht darin, dass es nicht nur als Molchsensor, sondern weitgehend unverändert auch an anderen Teilen der elektrostatischen Beschichtungsanlage verwendet werden kann, die unter Hochspannung stehen können (aber nicht müssen). Als Beispiel hierfür ist in Fig. 3 ein Pneumatikzylinder 30 dargestellt, der u.a. als pneumatischer Linearantrieb für eine in der Nähe des Zerstäubers befindliche Leitungstrennkupplung und sonstige unter Hochspannung stehende Teile der Beschichtungsanlage benötigt wird. An der in dem Pneumatikzylinder verschiebbaren Kolbenstange ist mindestens ein Magnet oder sonstiger magnetisch wirksamer Geber angeordnet (nicht dargestellt), auf den in den beiden Endstellungen des Kolbens je ein Sensor 35 bzw. 35' der hier beschriebenen Art anspricht. Die beiden Sensoren können in der dargestellten Lage parallel zur Kolbenbewegungsrichtung auf einfache Weise mit den Halterungen 31, 31' an dem Pneumatikzylinder 30 befestigt werden.

In ähnlicher Weise wie bei dem dargestellten Pneumatikzylinder können auch in den unter Hochspannung stehenden Kolbendosierzylindern, die in bekannten Beschichtungsanlagen zur dosierten Flüssigkeitsförderung verwendet werden, die Kolbenendstellungen überwacht und gemeldet werden.

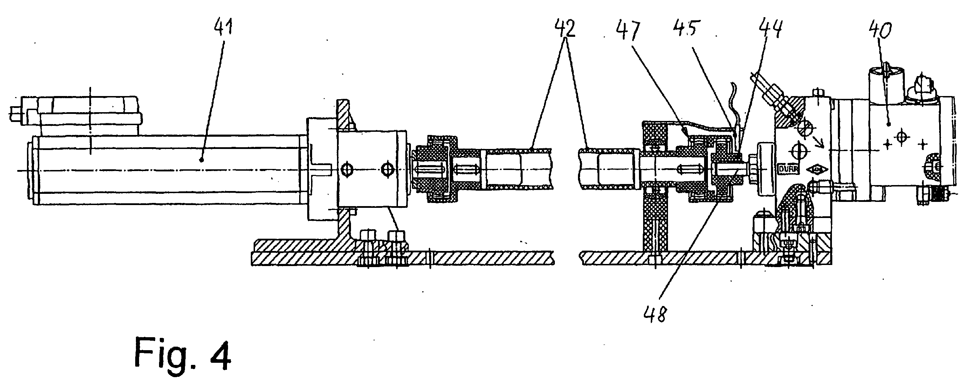

Als anderes Beispiel zeigt Fig. 4 eine Zahnrad- oder sonstige Dosierpumpe 40 zur dosierten Förderung von Farblack, der von einem in der Nähe befindlichen Zerstäuber auf Hochspannungspotential aufgeladen sein kann. Die Dosierpumpe 40 wird von einem Antriebsmotor 41 über eine aus Isolierwerkstoff bestehende Welle 42 und über eine Kupplung 47 angetrieben. Bei solchen Dosierpumpenanordnungen besteht die Möglichkeit eines Bruchs der Isolierwelle 42 oder eines Kupplungsschadens mit der Folge, dass bei rotierendem Antriebsmotor 41 die Dosierpumpe 40 unbemerkt stehen bleibt. Aus diesem Grund ist zur Überwachung der Pumpenfunktion an einer unmittelbar an der Eingangswelle der Pumpe, beispielsweise in dem auf der Eingangswelle sitzenden rotierenden Kupplungsglied 48 ein Geber wie z.B. ein Magnet 44 montiert, auf den der stationär in der Nähe des Kupplungsteils 48 angeordnete Sensor 45 der oben beschriebenen Art anspricht. Wenn die Pumpe stehen bleibt, ändert sich dementsprechend das Lichtsignal, das bei normalem Betrieb durch den zyklischen Vorbeilauf des Magneten 44 von dem Sensor 40 erzeugt wird. Da das Lichtsignal sich auch mit der Frequenz der Polarisationsänderung im Sensor 45 ändert, zeigt sich bei diesem Beispiel, dass mit dem beschriebenen Sensorsystem auch die Drehzahl von unter Hochspannung stehenden rotierenden Teilen in einer elektrostatischen Beschichtungsanlage gemessen werden kann. Die Signalauswertng bzw. Drehzahlmessung kann in der entfernt außerhalb des Hochspannungsbereichs befindlichen elektronischen Einrichtung erfolgen.

Eine weitere, nicht dargestellte Anwendungsmöglichkeit der Erfindung besteht darin, dass das Sensorelement und das magnetisch wirksame Geberelement Kollisionsschutzelemente einer ein elektrostatisches Beschichtungswerkzeug oder ein sonstiges Werkzeug bewegende Maschine der Beschichtungsanlage sind, wobei das eine Element in oder an einem Festteil der Maschine und das andere Element in oder an einem sich bei einer Kollision des Werkzeugs relativ zu dem Festteil bewegenden Teil angeordnet ist. Ein typisches Beispiel hierfür ist die Anordnung des Geberelements am Befestigungsflansch eines Zerstäubers, der beispielsweise auswechselbar an einem Lackierroboter montiert ist und sich relativ zu dessen Befestigungsflansch bewegt, wenn er mit einem zu beschichtenden Werkstück oder einem Anlagenteil kollidiert. In diesem Fall wird der Sensor in der Nähe des Geberelements an dem Befestigungsflansch des Roboters angeordnet und die Änderung des Lichtsignals genutzt, die sich ergibt, wenn der Einfluss des Magnetfeldes auf den Sensor bzw. die Beeinflussung des Magnetfeldes im Sensor schwächer wird oder verschwindet. Insbesondere eignet sich das Sensorsystem für eine der in der DE 101 15 661 beschriebenen Kollisionsschutzeinrichtungen, auf die hier Bezug genommen wird. In ähnlicher Weise kann das Geberelement auch zur einfachen Werkzeugpositionserfassung in oder an einem auswechselbar an einem Halteteil einer Bewegungsmaschine der Beschichtungsanlage montierten elektrostatischen Zerstäuber oder sonstigem Werkzeug angeordnet sein, während das Sensorelement in oder an dem Halteteil angeordnet ist.

Gemäß einem weiteren Beispiel kann das Geberelement zur Schaltstellungsabfrage in oder an einem ferngesteuert umschaltbaren, unter Hochspannung arbeitenden Ventil angeordnet sein, dessen bewegbares Ventilglied zwischen zwei Schaltstellungen verschiebbar ist und in der einen Schaltstellung den Weg für ein durch das Ventil fließendes Medium freigibt, während das Ventil geschlossen ist, wenn sich das Ventilglied in seiner anderen Schaltstellung befindet. Hier ist das Geberelement in einem mit dem Ventilglied verschiebbaren Bauteil und das Sensorelement in oder an einem relativ zu dem Ventilglied feststehenden Bauteil des Ventils angeordnet. Typisch kann es sich um die in der DE 101 15 472 beschriebene Abfrage der Stellung des Hauptnadelventils eines elektrostatischen Zerstäubers handeln, auf die hier Bezug genommen wird.

## Patentansprüche

1. Sensoranordnung für eine Anlage zur serienweisen elektrostatischen Beschichtung von Werkstücken
mit einem bewegbaren Körper (12), der mindestens ein die Lage oder Bewegung des Körpers meldendes magnetisch wirksames Geberelement (14) enthält,
und mit mindestens einem auf das Geberelement (14) ansprechenden Sensorelement (15), das in einem im Betrieb der Anlage auf Hochspannungspotential liegenden Anlagenteil angeordnet ist,
**dadurch gekennzeichnet, dass** das Sensorelement (15) eine optische Polarisationseinrichtung enthält,
dass durch Annäherung des Geberelements (14) die Polarisation von durch die Polarisationseinrichtung geleitetem Licht in dem Sensorelement (15) magnetooptisch zur Erzeugung eines Lichtsignals verändert wird,
und dass eine Lichtwellenleiteranordnung (16) von der Polarisationseinrichtung in dem auf Hochspannung liegenden Anlagenteil zu einer hiervon entfernten elektronischen Einrichtung zur Erzeugung eines dem Lichtsignal entsprechenden elektrischen Signals führt.

2. Sensoranordnung nach Anspruch 1, **dadurch gekennzeichnet, dass** das Geberelement (14) ein Magnet ist.

3. Sensoranordnung nach Anspruch 1, **dadurch gekennzeichnet, dass** das Geberelement aus einem Werkstoff besteht, durch den das Magnetfeld eines in dem Sensorelement befindlichen Magnetelements änderbar ist.

4. Sensoranordnung nach einem der vorhergehenden Ansprüche, **dadurch gekennzeichnet, dass** das Sensorelement (15) einen Reflektor enthält, der das von der Polarisationseinrichtung kommende Licht zu einem Analysator der Polarisationseinrichtung zurückleitet, wobei sich zwischen der Polarisationseinrichtung und dem Reflektor ein die Polarisationseinrichtung drehendes Brechungselement oder Prisma befindet, und dass an die Polarisationseinrichtung ein Lichtleiter für das dem Sensorelement (15) zugeführte Licht und ein Lichtleiter für das der elektronischen Einrichtung zugeführte Licht angeschlossen sind.

5. Sensoranordnung nach einem der vorhergehenden Ansprüche, **dadurch gekennzeichnet, dass** das die Polarisationseinrichtung enthaltende Sensorelement (15) als Molchsensor an einer Leitung (10) der Beschichtungsanlage angeordnet ist, durch die ein das magnetische Geberelement (14) enthaltender Molchkörper (12) gefördert wird.

6. Sensoranordnung nach einem der vorhergehenden Ansprüche, **dadurch gekennzeichnet, dass** das Sensorelement (25) in eine Molchstation (20) der Beschichtungsanlage eingebaut ist.

7. Sensoranordnung nach einem der Ansprüche 1 bis 4, **dadurch gekennzeichnet, dass** das Sensorelement und das Geberelement Kollisionschutzelemente einer ein elektrostatisches Beschichtungswerkzeug oder ein sonstiges Werkzeug bewegenden Maschine der Beschichtungsanlage sind, wobei das eine Element in oder an einem Festteil der Maschine und das andere Element in oder an einem sich bei einer Kollision des Werkzeugs relativ zu dem Festteil bewegenden Teil angeordnet ist.

8. Sensoranordnung nach einem der Ansprüche 1 bis 4, **dadurch gekennzeichnet, dass** das Geberelement zur Werkzeugpositionserfassung in oder an einem auswechselbar an einem Halteteil einer Bewegungsmaschine der Beschichtungsanlage montierten elektrostatischen Beschichtungswerkzeug oder einem sonstigen Werkzeug angeordnet ist, während das Sensorelement in oder an dem Halteteil angeordnet ist.

9. Sensoranordnung nach einem der Ansprüche 1 bis 4, **dadurch gekennzeichnet, dass** das Sensorelement und das Geberelement zur Schaltstellungsabfrage in oder an einem ferngesteuert umschaltbaren, unter Hochspannung arbeitenden Ventil angeordnet sind, dessen bewegbares Ventilglied zwischen zwei Schaltstellungen verschiebbar ist und in der einen Schaltstellung den Weg für ein durch das Ventil fließendes Medium freigibt, während das Ventil geschlossen ist, wenn sich das Ventilglied in seiner anderen Schaltstellung befindet, wobei das Geberelement in einem mit dem Ventilglied verschiebbaren Bauteil und das Sensorelement in oder an einem relativ zu dem Ventilglied feststehenden Bauteil des Ventils angeordnet ist.

10. Sensoranordnung nach einem der Ansprüche 1 bis 4, **dadurch gekennzeichnet, dass** das Geberelement zur Kolbenpositionserfassung in oder an einem Kolben angeordnet ist, der in einem unter Hochspannung arbeitenden Zylinder (30) verschiebbar ist, wobei das Sensorelement in der Nähe einer Endlage des mit dem Kolben verschiebbaren Geberelements angeordnet ist.

11. Sensoranordnung nach einem der Ansprüche 1 bis 4, **dadurch gekennzeichnet, dass** zur Meldung einer Antriebsunterbrechung einer von einem Motor (41) angetriebenen Dosierpumpe (40) oder sonstigen unter Hochspannung rotierenden Einrichtung der Beschichtungsanlage das Geberelement (44) in oder an einem rotierenden Bauteil (48) der Einrichtung und das Sensorelement (45) an einem relativ zu dem rotierenden Bauteil (48) feststehenden Teil der Einrichtung angeordnet ist.

12. Sensoranordnung nach einem der Ansprüche 1 bis 4, **dadurch gekennzeichnet, dass** das Geberelement an einem unter Hochspannung rotierenden Teil eines elektrostatischen Zerstäubers oder sonstigen Gerätes der Beschichtungsanlage angeordnet ist, und dass das Sensorelement an eine Drehzahlmesseinrichtung angeschlossen ist.

## Claims

1. Sensor arrangement for an installation for serial electrostatic coating of workpieces with a movable body (12) which has at least one magnetically acting transmitter element to signal the position or movement of the body, and with at least one sensor element (15) which responds to the transmitter element (14) and is disposed in a part of installation which during operation of the installation is at high voltage potential, **characterised in that** the sensor element (15) contains an optical polarising device, that due to the approach of the transmitter element (14) the polarisation of light guided by the polarising device in the sensor element (15) is changed magneto-optically in order to generate a light signal, and that an optical waveguide arrangement (16) leads from the part of the installation at high voltage to an electronic device remote therefrom for generating an electrical signal corresponding to the light signal.

2. Sensor arrangement as claimed in Claim 1, **characterised in that** the transmitter element (14) is a magnet.

3. Sensor as claimed in Claim 1, **characterised in that** the transmitter element is made from a material by which the magnetic field of a magnetic element located in the sensor element can be varied.

4. Sensor arrangement as claimed in any one of the preceding claims, **characterised in that** the sensor element (15) includes a refractor element which returns the light coming from the polarising device to an analyser of the polarising device, wherein a refracting device or prism which rotates the polarising device is located between the polarising device and the reflector, and that a waveguide for the light delivered to the sensor element (15) and a waveguide for the light delivered to the electrotechnical device are connected to the polarising device.

5. Sensor arrangement as claimed in any one of the preceding claims, **characterised in that** the sensor element (15) including the polarising device is disposed as a pig sensor on a line (10) of the coating installation through which a pig body containing the magnetic transmitter element (14) is conveyed.

6. Sensor arrangement as claimed in any one of the preceding claims, **characterised in that** the sensor element (25) is installed in a pigging station (20) of the coating installation.

7. Sensor arrangement as claimed in any one of Claims 1 to 4, **characterised in that** the sensor element and the transmitter element are collision protection elements of a machine of the coating installation which moves an electrostatic coating tool or some other tool, wherein one element is disposed in or on a stationary part of the machine and the other element is disposed in or on a part which moves relative to the stationary part during a collision of the tool.

8. Sensor arrangement as claimed in any one of Claims 1 to 4, **characterised in that** the transmitter element for detecting the position of the tool is disposed in or on an electrostatic coating tool or some other tool mounted replaceably on a retaining part of a machine for moving the coating installation, whilst the sensor element is disposed in or on the retaining part.

9. Sensor arrangement as claimed in any one of Claims 1 to 4, **characterised in that** in order to determine the switching position the sensor element and the transmitter element are disposed in or on a valve which operates under a high voltage and can be switched by remote control, wherein the movable valve member of the said valve can be displaced between two switching positions and clears the path for a medium flowing through the valve in one switching position whilst the valve is closed if the valve member is situated in the other switching position, whereby the transmitting element is disposed in or on a part of the valve which is stationary relative to the valve member.

10. Sensor arrangement as claimed in any one of Claims 1 to 4, **characterised in that** for detection of the piston position the transmitter element is disposed in or on a piston which is displaceable in a cylinder (30) which operates under a high voltage, wherein the sensor element is disposed in the vicinity of an end position of the transmitter element which is displaceable with the piston.

11. Sensor arrangement as claimed in any one of Claims 1 to 4, **characterised in that** in order to signal an interruption to driving of a metering pump driven by a motor (41) or other device of the coating installation rotating under high voltage the transmitter element is disposed in or on a rotating component (48) of the device and the sensor element (45) and the sensor element is disposed on a part of the device which is stationary relative to the rotating component (48).

12. Sensor arrangement as claimed in any one of Claims 1 to 4, **characterised in that** the transmitter element is disposed on a part of an electrostatic atomiser or other device of the coating installation which is rotating under high voltage, and that the sensor element is connected to a speed measuring device.

## Revendications

1. Dispositif de détection pour une installation de revêtement électrostatique en série de pièces, comportant un corps déplaçable (12) qui contient au moins un élément transmetteur (14) à action magnétique, signalant la position ou le mouvement du corps, et comportant au moins un élément de détection (15) réagissant à l'élément transmetteur (14) et qui est disposé dans une partie de l'installation se trouvant à un potentiel haute tension pendant le fonctionnement de l'installation, **caractérisé en ce que** l'élément de détection (15) contient un dispositif de polarisation optique, **en ce qu'**à l'approche de l'élément transmetteur (14), la polarisation est modifiée de façon optomagnétique par la lumière guidée à travers le dispositif de polarisation, dans l'élément de détection (15), pour produire un signal lumineux, et **en ce qu'**un agencement de guides d'ondes lumineuses (16) mène du dispositif de polarisation dans la partie de l'installation sous haute tension, vers un dispositif électronique éloigné de celle-ci, pour produire un signal électrique correspondant au signal lumineux.

2. Dispositif de détection selon la revendication 1, **caractérisé en ce que** l'élément transmetteur (14) est un aimant.

3. Dispositif de détection selon la revendication 1, **caractérisé en ce que** l'élément transmetteur est constitué d'un matériau par lequel le champ magnétique d'un élément magnétique se trouvant dans l'élément de détection peut être modifié.

4. Dispositif de détection selon l'une des revendications précédentes, **caractérisé en ce que** l'élément de détection (15) contient un réflecteur qui renvoie la lumière provenant du dispositif de polarisation vers un analyseur du dispositif de polarisation, un élément de diffraction ou prisme, qui fait tourner le dispositif de polarisation, se trouvant entre le dispositif de polarisation et le réflecteur, et **en ce qu'**au dispositif de polarisation est raccordé un guide optique pour la lumière amenée à l'élément de détection (15), et un guide optique pour la lumière amenée au dispositif électronique.

5. Dispositif de détection selon l'une des revendications précédentes, **caractérisé en ce que** l'élément de détection (15), contenant le dispositif de polarisation, est disposé en tant que capteur de raclage sur une conduite (10) de l'installation de revêtement, à travers laquelle un corps de raclage (12) contenant l'élément transmetteur magnétique (14) est transporté.

6. Dispositif de détection selon l'une des revendications précédentes, **caractérisé en ce que** l'élément de détection (25) est monté dans un poste de raclage (20) de l'installation de revêtement.

7. Dispositif de détection selon l'une des revendications 1 à 4, **caractérisé en ce que** l'élément de détection et l'élément transmetteur sont des éléments de protection contre une collision d'une machine de l'installation de revêtement, déplaçant un outil électrostatique de revêtement ou un autre outil, un élément étant disposé dans ou sur une partie fixe de la machine et l'autre élément dans ou sur une partie se déplaçant par rapport à la partie fixe lors d'une collision de l'outil.

8. Dispositif de détection selon l'une des revendications 1 à 4, **caractérisé en ce que** l'élément transmetteur pour la détection de la position de l'outil est disposé dans ou sur un outil électrostatique de revêtement monté sur une partie de fixation d'une machine de déplacement de l'installation de revêtement, ou dans ou sur un autre outil, tandis que l'élément de détection est disposé dans ou sur la partie de fixation.

9. Dispositif de détection selon l'une des revendications 1 à 4, **caractérisé en ce que** l'élément de détection et l'élément transmetteur sont disposés, pour l'interrogation de la position de commutation, dans ou sur une soupape commutable, télécommandée, fonctionnant sous haute tension, dont l'organe de soupape déplaçable peut coulisser entre deux positions de commutation et libère, dans une position de commutation, la voie pour un fluide circulant à travers la soupape, tandis que la soupape est fermée lorsque l'organe de soupape se trouve dans son autre position de commutation, l'élément transmetteur étant disposé dans un composant pouvant coulisser avec l'organe de soupape, et l'élément de détection étant disposé dans ou sur un composant de la soupape qui est fixe par rapport à l'organe de soupape.

10. Dispositif de détection selon l'une des revendications 1 à 4, **caractérisé en ce que** l'élément transmetteur pour la détection de la position du piston est disposé dans ou sur un piston qui peut coulisser dans un cylindre (30) fonctionnant sous haute tension, l'élément de détection étant disposé à proximité d'une position de fin de course de l'élément transmetteur pouvant coulisser avec le piston.

11. Dispositif de détection selon l'une des revendications 1 à 4, **caractérisé en ce que** pour signaler une interruption de l'entraînement d'une pompe de dosage (40), entraînée par un moteur (41), ou d'un autre dispositif tournant sous haute tension de l'installation de revêtement, l'élément transmetteur (44) est disposé dans ou sur un composant rotatif (48) du dispositif et l'élément de détection (45) est disposé sur une partie du dispositif qui est fixe par rapport au composant rotatif (48).

12. Dispositif de détection selon l'une des revendications 1 à 4, **caractérisé en ce que** l'élément transmetteur est disposé sur une partie, tournant sous haute tension, d'un pulvérisateur électrostatique ou d'un autre appareil de l'installation de revêtement, et **en ce que** l'élément de détection est raccordé à un dispositif de mesure de la vitesse de rotation.
